# EUROPÄISCHE PATENTANMELDUNG

(11) **EP 3 415 368 A1**
(43) Veröffentlichungstag der Anmeldung: **19.12.2018**
(21) Anmeldenummer: 17460049.4
(22) Anmeldetag: 26.08.2017
(51) Int. Cl.: B60Q 1/32, B60Q 1/26, F16B 2/06

(54) **HALTER FÜR SEITENMARKIERUNGSLEUCHTEN**

(30) Priorität: 17.06.2017 PL 42193317
(71) Anmelder: "WIELTON" Spolka Akcyjna, 98-300 Wielun (PL)
(72) Erfinder: Szczepanski, Dariusz, 98-300 Wielun (PL); Kaczor, Maciej, 98-346 Skomlin (PL); Jens, Miroslaw, 98-355 Dzialoszyn (PL); Kocybik, Sebastian, 42-680 Tarnowskie Góry (PL)
(74) Vertreter: Korbela, Anna

(57) **Zusammenfassung**

Die Erfindung bezieht sich auf einen Halter für Seitenmarkierungsleuchten, der grundsätzlich aus einem Element dh. einem Formstück (1) besteht, das aus Kunststoff oder Metall, z.B. aus Stahl gefertigt wird. Der untere Teil des Formstücks (1) ist für Platzierung und Fixierung verschiedener Typen von Seitenmarkierungsleuchten (2) bestimmt. Die Seitenmarkierungsleuchte (2) wird an das Formstück (1) mit Hilfe von mindestens zwei Montageschrauben (3) - bevorzugte Abmessungen 4 mm x 19 mm- angeschraubt, die in die Seitenwände der Seitenmarkierungsleuchte (2) entlang der vorderen Frontwand der der Seitenmarkierungsleuchte (2) oder in die Vorderwand der Seitenmarkierungsleuchte (2) und quer zu ihr eingeführt werden.
Im unteren Teil des Formstücks (1) wird eine grundsätzlich quadratische Öffnung (4) ausgeführt, deren Ecken abgerundet sind. In der Öffnung (4) im unteren Teil des Formstücks (1) wird ein hier hineingeschobener Stecker (5) befestigt, die notwendige Stromversorgung für beliebige Arten von Seitenmarkierungsleuchten (2) garantiert. Der Stecker (5) wird mit der elektrischen Anlage des Fahrzeugs verbunden, die in der Regel in der Bordwand des Aufliegers errichtet und mit Hilfe der das Elektrokabel befestigenden Klammern angebracht wird. Der Stecker (5) kann auch mit selbst erzeugter elektrischer Energie versorgt werden z.B. aus Fotovoltaik. In dem unteren Teil des Formstücks (1) wurden auch Öffnungen ausgeführt, die Schraubenmuffen [Schraubenhülsen] (6) bilden, in die Montageschrauben (3) eingesetzt werden können, mit deren Hilfe Seitenmarkierungsleuchte (2) montiert wird.

## Beschreibung

Der Gegenstand der Erfindung ist ein Halter für eine Seitenmerkierungsleuchte, auch Seitenmarkierungsleuchte genannt. Der Halter für eine Seitenmerkierungsleuchte erfüllt die Funktion einer Lampenfassung und ist zur Verwendung an verschiedenen Fahrzeugen bestimmt, vor allem an Radfahrzeugen, Personen- und Lastkraftwagen, insbesondere an LKW- Aufliegern, aber auch an Schienen - und Amphibienfahrzeugen.

Es gibt viele Lösungen für und Halter für andere Lampen. Aus der amerikanischen Beschreibung der Erfindung mit der Anmeldenummer US6652119B1 ist die Lösung unter dem Namen "Multi-lamp fluorescent light fixture"cx ("Lampenfassung für verschiedene Typen von Fluoreszenslampen") bekannt. Der Gegenstand der Erfindung ist Lampenfassung für verschiedene Typen von Fluoreszenslampen, die die Montage der fluoreszierenden Umrisslampe an der Bordwand eines Aufliegers ermöglicht. Die Einzelfassung besitzt im Gehäuse einen Strahlreflektor und ist zur Montage in ihrem Innern einer oder mehr Lampen bestimmt, wobei der Betrieb von maximal vier Lampen möglich ist, deshalb beinhaltet sie vier Lampenfassungen. Die Lampe kann an irgendeine der vier Fassungen angeschlossen werden.

Aus einer anderen Beschreibung der amerikanischen Erfindung mit der Anmeldenummer US5272602A ist die Lösung "Device for mounting a supplemental stop lamp or the like to a windowpane with ease of connection to a power supply" ("Vorrichtung für den Anbau einer zusätzlichen Stoppleuchte oder dergleichen an die Heckscheibe des Fahrzeugs mit einem einfachen Anschluss an Stromquelle") bekannt. Ein Paar der Leitungsgeräte, die elektrisch mit der Autobatterie des Fahrzeugs verbunden sein sollen, wird durch das Sintern an der inneren Fläche der Heckscheibe erzeugt. Ein Paar von Muttern oder Stützen aus elektrisch leitendem Material wird an leitfähige Aufdrücke (Muster) eingelötet. Das komplementäre Gehäuse der hohen Stoppleuchte ist mittels Schrauben oder Schrauben mit Schlitz mit der Lichtquelle aus der elektrischen, mit dem System verbundenen Lampe befestigt.

Aus der nächsten Beschreibung der amerikanischen Erfindung mit der Anmeldenummer US3451035 - ist die Lösung unter dem Namen "Rail mounting bracket for vehicle lamps" ("eine an Schienen montierte, für Fahrzeuge bestimmte Lampenfassung") bekannt. Die Lampenfassung ist in einer kanalförmigen Schiene montiert, die mit dem Chassis verbunden ist. Die Fassung kann an jeder Stelle der Schiene eingefügt und drehbar zum Anfangspunkt [Berührungspunkt] mit der Schienenfläche verlagert werden. Durch Drehbewegung kann die Position der Fassung fixiert werden, was mit Hilfe eines Verbindungstücks in Form eines Zahnes zum Kabeldurchschlag führt. Der untere Teil der Fassung kann auch zwischen anderen Verbindungstücken und der Nut verriegelt werden, die auf der Montagefläche der Schiene hergestellt sind.

Aus der nächsten chinesischen Beschreibung des Gebrauchsmusters mit der Anmeldenummer CN205560611 ist die Lösung "Side skirt integrated configuration of situation lamp" ("Seitenrandzone mit integrierter Konfiguration der Situationslampen") bekannt. Das Gebrauchsmuster beschreibt eine Seitenrandzone mit integrierter Konfiguration der Situationslampen. Die Situationslampe umfasst ein Lampengehäuse, das sich aus einem somatischen Teil, einer Lampenfassung und einer Seitenrandzone zusammensetzt, die vorteilhaft in beliebiger Farbe gestrichen sein kann. Die Enden des somatischen Teils sind getrennt ausgebildet, das eine Ende des somatischen Teils ist ein Lampenhalter, das andere Ende des somatischen Teils verbindet sich mit der Seitenrandzone, die Seitenrandzone mit dem somatischen Teil lassen sich demontieren. Das Gebrauchsmuster offenbart, dass die Seitenrandzone mit integrierter Konfiguration der Situationslampen dem Nutzer den Wechsel der Seitenrandzone ermöglicht, z.B. Farbenwechsel, wobei der Mechanismus aus einigen kleinen Elementen besteht, die leicht zu transportieren und für Massenproduktion geeignet sind.

Aus einer anderen Beschreibung der polnischen Erfindung mit der Anmeldenummer P.338197 (Veröffentlichungstag im Patentblatt BUP 2000-07-17) ist die Lösung "Kombinationsrücklicht für Last- und Lieferwagen" bekannt. Der Gegenstand der Erfindung ist ein Kombinationsrücklicht für Last- und Lieferwagen. Die Leuchte zeichnet sich dadurch aus, dass sie aus einem Gehäuse besteht, in dessen Inneren drei Glühbirnenfassungen angebracht und an dessen Boden zwei Schrauben mit Muttern angeschraubt sind. Im Boden befindet sich eine Öffnung und am Rande wurden zwei Nuten [Rillen] gemacht. Das Gehäuse ist mit einem gewölbten Deckel ausgestattet, der aus reflektierendem Kunststoff ausgeführt und in drei Segmente unterteilt ist, wobei die seitlichen Segmente von innen mit roten Einschnitten, mit einem Kreis in der Mitte versehen sind, und das mittlere Segment gelb ist, in der Mitte einen Kreis besitzt und von innen einen Einschnitt aufweist. Innerhalb des Deckels, in dessen Mitte ist ein Einsatz montiert und am Deckelrand ein Gummiring aufgesetzt. Im Deckel sind zwei Öffnungen für Schrauben vorhanden.

Die Aufgabe der vorliegenden Erfindung ist es, solche Halter für Seitenmerkierungsleuchten zu schaffen, die gleichzeitig als Fassung für diese Leuchten dienen und an den Fahrzeugträger mit I-förmigen oder mit Ω-förmigen Querschnitt montiert werden könnten, ohne zusätzliche Montageschrauben gebrauchen zu müssen.

Das Wesentliche des Halters für eine Seitenmerkierungsleuchte, in dessen unterem Teil eine Seitenmerkierungsleuchte platziert und montiert ist, beruht darauf, dass er in der Form eines Formstücks ausgebildet ist, an das - mit Hilfe von mindestens zwei Montageschrauben - eine Seitenmerkierungsleuchte angeschraubt ist. In dem unteren Teil des Formstücks gibt es eine Öffnung, in die ein Stecker hineingeschoben ist. In dem unteren Teil des Formstücks dagegen gibt es Öffnungen, die Schraubenmuffen [Schraubenhülsen] bilden, wo Montageschrauben, die die Seitenmerkierungsleuchte am Formstück befestigen, platziert werden können. Der obere Teil des Formstücks ist so ausgebildet, dass er die Form eines Flacheisens annimmt, das in seinem oberen Teil eine zweiarmige Schelle besitzt, die den Träger des Aufliegers umfasst, an den die Seitenmerkierungsleuchte montiert wird.

Vorzugsweise ist das Formstück ein einelementiger Monolith.

Vorzugsweise wird das Formstück aus Kunststoff oder aus Metall, am besten aus Stahl gefertigt.

Vorzugsweise haben die Montageschrauben, mit denen die Seitenmerkierungsleuchte am Formstück angeschraubt ist, Abmessungen 4 mm x 19 mm.

Vorzugsweise werden die Montageschrauben für den Halter der **Seitenmerkierungsleuchte** in die Seitenwände der **Seitenmerkierungsleuchte,** entlang der vorderen Frontwand der **Seitenmerkierungsleuchte** oder in die Vorderwand der **Seitenmerkierungsleuchte** und quer zu ihr eingeführt.

Vorzugsweise hat die im Halter der Montagelampe gemachte Öffnung - die Form eines Quadrates und deren Ecken sind in der Regel abgerundet.

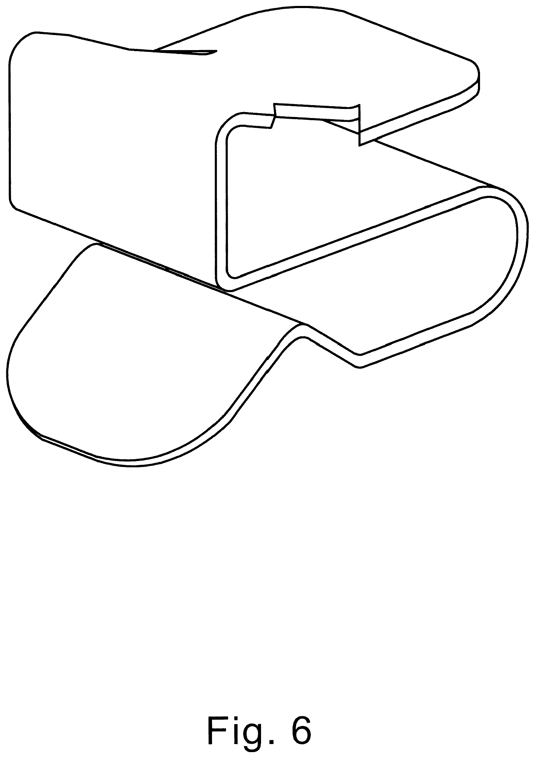

Vorzugsweise ist der Stecker in der Öffnung montiert und an die elektrische Anlage des Fahrzeugs angeschlossen, die in der Bordwand des Aufliegers errichtet wird. Eventuell ist der Stecker an die Anlage der Fotovoltaikzelle angeschlossen. Die elektrische Anlage wird gewöhnlich mit Hilfe von den das Elektrokabel befestigenden Klammern errichtet (siehe Abbildung - Fig. 6).

Vorzugsweise ist das Flacheisen im Verhältnis zu dem unteren Teil des Formstücks zirka 90 ° in Richtung des Fahrzeugs umgebogen.

Vorzugsweise befinden sich auf jedem Schellenarm Schnittstellen mit grundsätzlich senkrechten Gewindeöffnungen.

Vorzugsweise besitzt das Flacheisen auf seiner Unterseite Durchbohrungen [Durchgangslöcher], die ermöglichen, in diese Durchbohrungen zusätzliche Montageschrauben einzuschrauben.

Vorzugsweise werden die in Durchbohrungen [Durchgangslöcher] des Flacheisens platzierten Montageschrauben in die Gewindeöffnungen, im Inneren der Schnittstellen eingeführt.

Vorzugsweise verfügen die Schellen über Verengungen.

Die erfindungsgemäße Lösung lässt den Halter der Montagelampe sowohl auf den Fahrzeugträger mit I-Querschnitt als auch auf den Fahrzeugträger mit Ω-Querschnitt anbringen - ohne zusätzliche Montageschrauben verwenden zu müssen. Außerdem macht diese erfindungsgemäße Lösung möglich, viele unterschiedliche Arten von Seitenmerkierungsleuchten in diesem Lampenhalter zu montieren. Der Vorteil der erfindungsgemäßen Lösung liegt in ihrer Vielseitigkeit und in der Möglichkeit, ausgearbeitete Leuchten zur Montage sowohl von Seitenmerkierungsleuchten "Hella" als auch "Aspöck" verwenden zu können.

Ferner ist die Montage in der erfindungsgemäßen Lösung einfach und sicher. In der hier vorgestellten Lösung sind zur Montage nicht viele Spezialvorrichtungen oder-werkzeuge erforderlich.

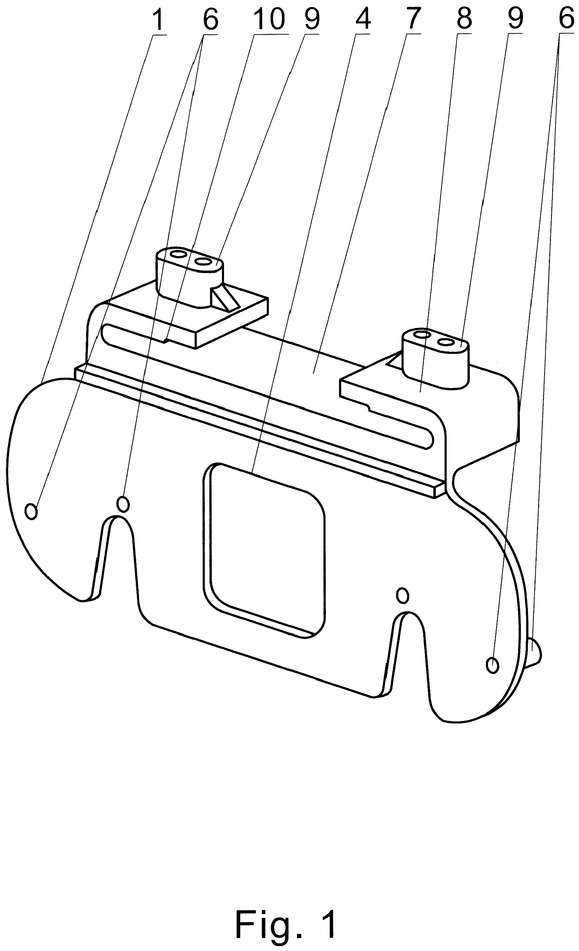

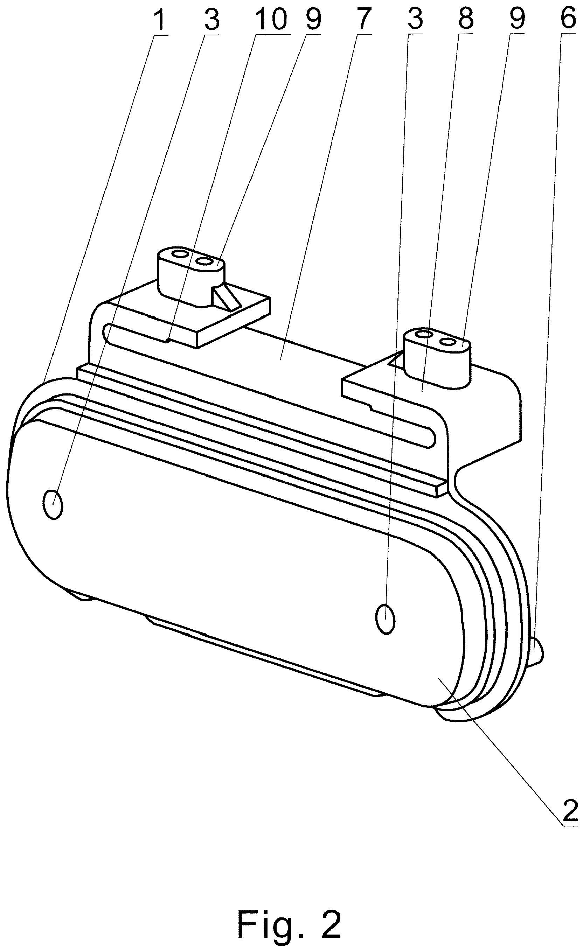

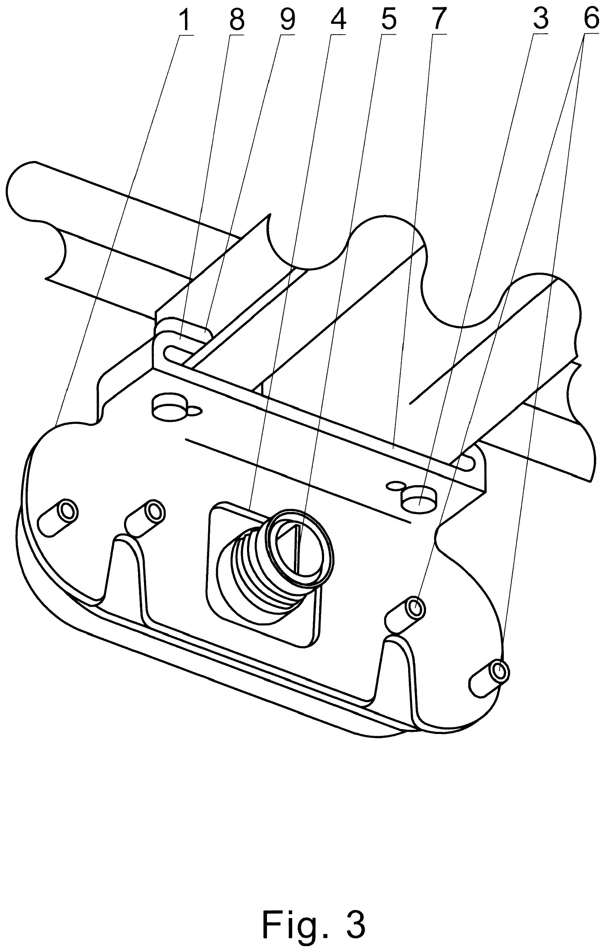

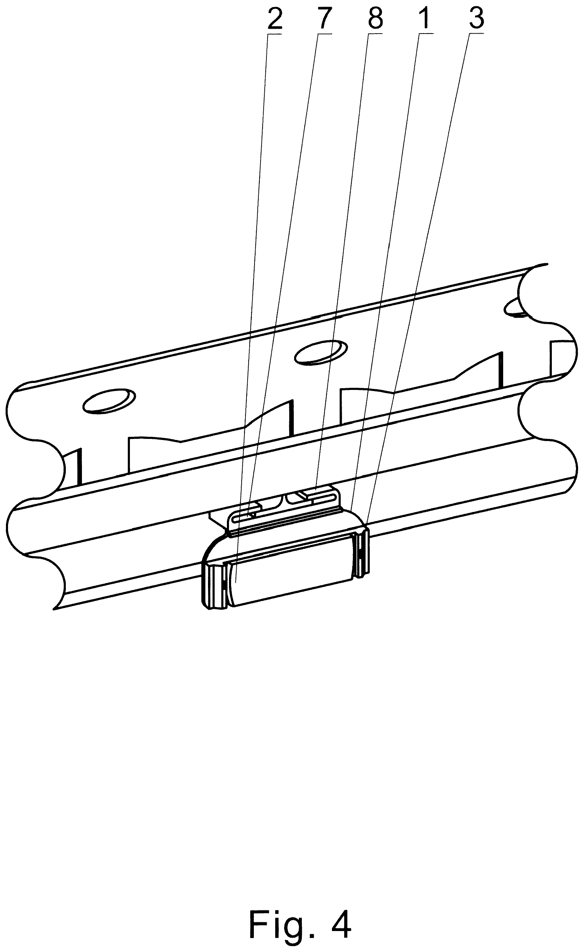

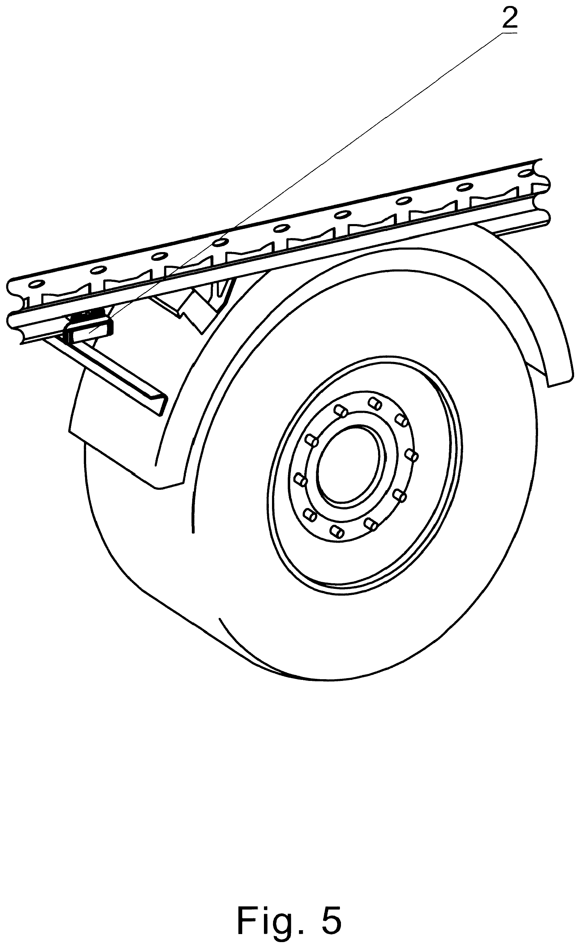

Der Gegenstand der Erfindung wurde näher am Ausführungsbeispiel auf Zeichnungen dargestellt, von denen Fig. 1 - axonometrische Ansicht des Halters für Seitenmerkierungsleuchte ohne montierte Leuchte präsentiert, Fig. 2 - axonometrische Ansicht des Halters für Seitenmerkierungsleuchte mit eingebauter Leuchte, Fig. 3 - axonometrische Ansicht der Seitenmerkierungsleuchte, gesehen von der Unterseite, vom Innern des Aufliegers mit sichtbaren Elementen der Bordwand und des Querträgers Typ "Ω" des Aufliegers, Fig. 4 - Ansicht der Seitenmerkierungsleuchte, die an den Fahrzeugträger mit I-Querschnitt zusammen mit einer anderen als auf der Zeichnung 2 dargestellten Leuchte montiert wird, Fig. 5 dagegen - Ansicht der oben beschriebenen Leuchte an dem Fahrzeugträger mit I-Querschnitt mit teilweise sichtbarem Fahrzeug und zusätzlich Fig. 6 - stellt eine in der Bordwand des Aufliegers zu befestigende Klemme dar, die zur Fixierung des Kabels für Elektroinstallation dient.

Was auf Zeichnungen zu sehen ist, besteht der Halter für Seitenmerkierungsleuchten grundsätzlich aus einem Element, hat die Form eines Formstücks 1, das aus Kunststoff oder Metall z.B. aus Stahl ausgeführt ist. Der untere Teil des Formstücks 1 ist zum Anbringen und Montierung verschiedenartiger Seitenmerkierungsleuchten 2 vorgesehen. Die Seitenmerkierungsleuchte 2 wird an das Formstück 1 mit Hilfe von mindestens zwei Montageschrauben 3 angeschraubt, bevorzugte Abmessungen 4 mm x 19 mm, die in die Seitenwände der Seitenmerkierungsleuchte 2, entlang der vorderen Frontwand der Seitenmerkierungsleuchte 2, oder in die Vorderwand der Seitenmerkierungsleuchte und quer zu ihr eingeführt werden. Im unteren Teil des Formstücks 1 wird eine grundsätzlich quadratische Öffnung 4 gemacht, deren Ecken abgerundet sind. In der Öffnung 4 des Formstücks 1 wird der hier hineingeschobene Stecker 5 befestigt, der Stromversorgung für beliebige Typen von Seitenmerkierungsleuchten 2 garantiert. Der Stecker 5 wird mit der elektrischen Anlage des Fahrzeugs verbunden, die in der Regel in der Bordwand des Aufliegers errichtet und mit Hilfe der das Elekttokabel befestigenden Klammern angebracht wird (Fig. 6). Der Stecker 5 kann auch mit selbst erzeugter elektrischer Energie versorgt werden z.B. **aus Fotovoltaik. In dem unteren Teil des Formstücks 1 sind auch** Öffnungen ausgeführt, die Schraubenmuffen [Schraubenhülsen] 6 bilden, in die Montageschrauben 3, mit deren Hilfe Seitenmerkierungsleuchte 2 montiert wird, eingesetzt werden können.

Der obere Teil des Formstücks 1 ist so ausgebildet, dass er zum Flacheisen 7 geformt wird, das im Verhältnis zu unterem Teil des Formstücks 1 zirka 90° in Richtung des Fahrzeugs umgebogen ist. Das Flacheisen 7 besitzt in seinem oberen Teil eine zusätzlich gestaltete, zweiarmige Schelle 8, die für die Einführung des Trägers des Aufliegers vorgeplant worden ist. Die Schelle 8, nach der Montage des Halters für Seitenmerkierungsleuchte 2 am Auflieger des Fahrzeugs - umfasst den Träger des Aufliegers, an den Seitenmerkierungsleuchte 2 montiert wird. Die Schelle 8 kann sowohl auf den Träger mit I-förmigen als auch mit Ω-förmigen Querschnitt geschoben werden. Auf jedem Arm der Schelle 8 sind Schnittstellen 9 mit grundsätzlich senkrechten Gewindeöffnungen angeordnet. Die Schnittstellen 9 ermöglichen die Kraft zu regulieren, mit der die Schelle 8 den in sie geschobenen Träger des Aufliegers umfasst, weil das Flacheisen 7 auf seiner Unterseite przedr 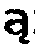 żenia Durchbohrungen besitzt, die erlauben, in diese Durchbohrungen zusätzliche Montageschrauben 3 einzuschrauben, damit Montageschrauben 3 in die Gewindeöffnungen, im Inneren der Schnittstellen 9 gelangen. Dadurch, dass senkrechte Öffnungen in Schnittstellen 9, ähnlich wie Montageschrauben 3 Gewinde aufweisen - reguliert die Drehung dh. Drehbewegung der Montageschraube 3 den Druck der Schellen 8. Die Anziehung der Montageschraube 3 verursacht das Festziehen der Schellen 8 und festere und stabilere Verankerung des Halters für Seitenmerkierungsleuchte auf dem Träger mit I-förmigen oder Ωförmigen Querschnitt. Das Lösen von Montageschrauben 3 führt dagegen zur Lockerung der Schellen 8, was auch den Halter für Seitenmerkierungsleuchte 2 vom Träger des Aufliegers abnehmen lässt.

Die Schellen 8 besitzen spezielle Verengungen 10, die das ungleichmäßige Hineinschieben des Trägers in die Schellen 8 verhindern. Dank der Verengung 10 in der Schelle 8 ist der Zwischenraum zwischen der Ansatzstelle und der Armbiegung der Schelle 8 breiter, und bildet eine Art Führungsschiene für den Träger des Lastkraftwagens, in die der Halter für Seitenmerkierungsleuchte 2 hingeschoben wird. Dadurch kann sich immer die richtig in die Schnittstelle 9 hineingeführte Montageschraube 3, die durch das Flacheisen 7 durchgeht - im dem ordentlich geschobenen Formstück 1 bewegen und den Druck der Schellenarme 8 regulieren. Mit anderen Worten, wenn die Elemente kooperieren, sind sie ordnungsgemäß angelegt und der Fahrzeugträger, an den der Halter für Seitenmerkierungsleuchte 2 montiert wird - blockiert Bewegungen der Montageschrauben 3 nicht, so können sie also ohne Probleme eingeschraubt werden.

So ausgeführter Halter für Seitenmerkierungsleuchte ist universall, eignet sich für die Montage verschiedener Typen von Seitenmerkierungsleuchte 2 und lässt sich leicht auf- und abbauen.

### Verzeichnis

1. Formstück,
2. Umrisslampe,
3. Schraube mit Schlitz (Montageschraube,)
4. Öffnung,
5. Stecker,
6. Schraubenmuffen [Schraubenhülsen],
7. Flacheisen,
8. Schelle,
9. Schnittstelle,
10. Verengung.

## Patentansprüche

1. Halter für Seitenmerkierungsleuchte, in dessen unterem Teil die Seitenmerkierungsleuchte platziert und montiert wird, **dadurch gekennzeichnet, dass** er in der Form eines Formstücks (1) ausgebildet ist, an das- mit Hilfe von mindestens zwei Montageschrauben (3) - eine Seitenmerkierungsleuchte (2) angeschraubt wird, wobei es in dem unteren Teil des Formstücks (1) eine Öffnung (4) gibt, in die ein Stecker (5) hineingeschoben wird, und in dem unteren Teil des Formstücks (1) auch Öffnungen ausgeführt worden sind, die Schraubenmuffen [Schraubenhülsen] (6) bilden, wo Montageschrauben (3) platziert werden können, die die Seitenmerkierungsleuchte (2) am Formstück (1) befestigen, der obere Teil des Formstücks (1) ist dagegen so ausgebildet, dass er die Form eines Flacheisens (7) annimmt, das in seinem oberen Teil eine zweiarmige Schelle (8) besitzt, die den Träger des Aufliegers umfasst, an den die Seitenmerkierungsleuchte (2) montiert wird.

2. Halter für Seitenmerkierungsleuchte, nach Anspruch 1, **dadurch gekennzeichnet, dass** das Formstück (1) ein einelementiger Monolith ist.

3. Halter für Seitenmerkierungsleuchte, nach Anspruch 1 oder 2, **dadurch gekennzeichnet, dass** das Formstück (1) aus Kunststoff oder aus Metall, bevorzugt aus Stahl gefertigt wird.

4. Halter für Seitenmerkierungsleuchte, nach Anspruch 1 oder 2 oder 3, **dadurch gekennzeichnet, dass** Montageschrauben (3), mit denen die Seitenmerkierungsleuchte (2) ans Formstück (1) angeschraubt ist, Abmessungen 4 mm x 19 mm haben.

5. Halter für Seitenmerkierungsleuchte, nach einem der Ansprüche 1 bis 4, **dadurch gekennzeichnet, dass** die Montageschrauben (3) in die Seitenwände der Seitenmerkierungsleuchte (2), entlang der vorderen Frontwand der Seitenmerkierungsleuchte (2) oder in die Vorderwand der Seitenmerkierungsleuchte (2) und quer zu ihr eingeführt werden.

6. Halter für Seitenmerkierungsleuchte, nach einem der Ansprüche 1 bis 5, **dadurch gekennzeichnet, dass** die in ihm gemachte Öffnung (4) die Form eines Quadrates hat und deren Ecken vorteilhaft abgerundet sind.

7. Halter für Seitenmerkierungsleuchte, nach einem der Ansprüche 1 bis 6, **dadurch gekennzeichnet, dass** der Stecker (5) in die Öffnung (4) montiert und an die elektrische, bevorzugt in der Bordwand des Aufliegers aufgebaute Anlage des Fahrzeugs, eventuell an die Fotovoltaikzelle angeschlossen wird, wobei die elektrische Anlage bevorzugt mit Hilfe von den das Elektrokabel befestigenden Klammern errichtet wird.

8. Halter für Seitenmerkierungsleuchte, nach einem der Ansprüche 1 bis 7, **dadurch gekennzeichnet, dass** das Flacheisen (7) im Verhältnis zu dem unteren Teil des Formstücks (1) zirka 90° in Richtung des Fahrzeugs umgebogen ist.

9. Halter für Seitenmerkierungsleuchte, nach einem der Ansprüche 1 bis 8, **dadurch gekennzeichnet, dass** auf jedem Schellenarm (8) Schnittstellen (9) mit grundsätzlich senkrechten Gewindeöffnungen angeordnet sind,.

10. Halter für Seitenmerkierungsleuchte, nach einem der Ansprüche 1 bis 9, **dadurch gekennzeichnet, dass** das Flacheisen (7) auf seiner Unterseite Durchbohrungen [Durchgangslöcher] aufweist, die es erlauben, in diese Durchbohrungen zusätzliche Montageschrauben (3) einzuschrauben.

11. Halter für Seitenmerkierungsleuchte, nach Anspruch 10, **dadurch gekennzeichnet, dass** die in den Durchbohrungen [Durchgangslöcher] des Flacheisens (7) platzierten Montageschrauben (3) in die Gewindeöffnungen, im Inneren der Schnittstellen (9) eingeführt werden.

12. Halter für Seitenmerkierungsleuchte, nach einem der Ansprüche von 1 bis 11, **dadurch gekennzeichnet, dass** Schellen (8) Verengungen (10) besitzen.
